# EUROPEAN PATENT APPLICATION

(11) **EP 0 611 915 A1**
(43) Date of publication of application: **24.08.1994**
(21) Application number: 94300964.7
(22) Date of filing: 10.02.1994
(51) Int. Cl.: F16L 59/10, F16L 58/16

(54) **A method of providing a protective cover to an elongate substrate**

(30) Priority: 19.02.1993 GB 9303336
(71) Applicant: N.V. RAYCHEM S.A., B-3200 Kessel-lo (BE)
(72) Inventor: Biscop, Francois, F-95280 Jouy le Moutier (FR)
(74) Representative: Auckland, Jacqueline

(57) **Abstract**

A method of covering a pipeline, which can be carried out either in the factory or in the field comprises enveloping the pipeline with a covering such as a helically wound tape (20) comprising a heat recoverable layer (21), having first surrounded the pipeline with a thermal barrier layer (such as a mastic 23) that bonds to the pipeline without the application of heat. A heat activatable adhesive (22) is used to bond the heat recoverable layer (21) to the thermal barrier layer. In the most preferred embodiment the thermal barrier layer and adhesive layer are pre-applied to the heat recoverable tape, and one edge (24) of the tape is bare of thermal barrier layer to allow good bonding between adjacent overlapping turns of the tape.

## Description

This invention relates to a method of providing a protective cover to an elongate substrate. particularly to pipe lines, or cables or connections between pipes or cables.

Various coatings for such elongate substrates are known and many are commercially available. One class of coatings that has been found to be effective include the so-called fusion bonded epoxy coatings. These coatings are applied to the substrate in powdered form and are then heated to relatively high temperatures, about 200° - 300°C, to cause the powder particles to fuse and flow together and cure to form a continuous coating bonded to the substrate. Typically, the substrate is preheated to these high temperatures before the powdered resin is applied. For good adhesion between the epoxy coating and the pipe, it is generally required that the surface of the pipe be adequately cleaned and abraded. The fusion bonded coating may be further protected by application of one or more additional layers. Coating systems of this type are disclosed in US Pat Nos. 4,213,486 to Samour and 4,510,007 to Stucke. A modification of this coating approach is disclosed in US Pat No. RE30,006 to Sakayori et al in which a modified polyolefin is applied to an uncured epoxy resin coated on a metal surface and then the system is heated to melt bond the uncured epoxy resin and the polyolefin and to cure the epoxy resin. The temperature utilised must be above the melting point of the polyolefin, generally between 80° and 350°C.

Another coating technique is disclosed in US Pat No. 3,231,443 to McNulty in which a cured resin layer (e.g. epoxy) carried on a film backing is applied over an uncured resin layer (e.g. epoxy) coated on the substrate to be protected. The cured and uncured resin interact to form a protective coating. It is said that the coating can be applied in the field. Cured epoxy resins are generally brittle and thus precuring the resin as suggested in McNulty is likely to be difficult under actual pipe installation conditions, particularly if the pipe is of relatively small diameter.

Yet another approach to coating metal substrates is described in US Pat No. 3,502,492 to Spiller. In this approach a thin layer of powered epoxy resin is coated on the metal surface and then a thick layer of plasticized polyvinyl chloride particles are applied. The coating is heated causing both the epoxy powder and the polyvinyl chloride powder to adhere to each other and to the underlying substrate. A continuous epoxy-polyvinyl chloride interface is not formed.

In general the above techniques because of the high temperatures and complex equipment required are limited to factory application of the coating or are otherwise impractical under actual field conditions.

Field application of coverings on elongate pipelines is sometimes desirable. As one example, re-covering of existing in-service pipelines, which may have been in use for. for example, 15-20 years may be required where the original corrosion protection has degraded such that it no longer serves its original purpose. This is particularly common for pipelines originally coated by coal tar. In order to re-coat the latter, the original coating, e.g. coal tar, must be removed section by section, and then replaced by a new coating, in the field. Application of pipeline coatings in the field, or protection of other substrates such as cable splices, prefer techniques that employ more moderate temperatures and portable equipment. One successful technique for coating pipelines in the field is the use of a heat-recoverable (i.e. heat shrinkable) polymeric article, such as a tube, sheet or tape, in combination with a heat activatable sealant. In installing such coatings, a torch or other heat sources is generally used to heat the article to cause it to recover. This heat also raises the temperature of the heat activatable sealant to above its activation temperature so that a strong bond is formed between the polymeric article and the substrate. Suitable sealants include hot melt adhesives and mastics. There are certain applications in which the substrate may act as a heat sink and prevent the interface between the adhesive and the pipe from attaining the minimum bond line temperature required to form a strong bond between the adhesive and the pipe. One such situation is an oil-carrying pipeline in which the oil is between 25° - 50°C. Under these conditions it is difficult to retrofit or repair a pipeline coating with a heat recoverable article such as described above, and in all, or most, applications it is generally necessary to preheat the pipelines significantly and for several minutes to minimise the heat sink effect. Known heat-recoverable coverings include those consisting of a radiation-crosslinked polyethylene-based layer lined with a layer of a high shear strength thermoplastic adhesive. An example of such a covering is the sleeve sold under the trade name Rayclad 110 by the Raychem Corporation.

A heat shrinkable or recoverable article is an article the dimensional configuration of the which can be substantially changed when the article is subjected to heat treatment. When heated, these articles generally recover towards an original shape from which they have previously been deformed, but the term "heat-recoverable" as used in the specification, also concludes an article which, on heating, adopts a new configuration, even if it has not been previously deformed. In their most common form, heat-recoverable articles comprise a heat-shrinkable sleeve made from a polymeric material exhibiting the property of elastic or plastic memory. Alternatively, heat-recoverable articles can be moulded into shapes intended for specific applications. Articles comprising such elastic or plastic memory are described, for example, in U.S. Patents Nos. 2,027,962 (Currie); 3,086,242 (Cook et al); and 3,597,372 (Cook), the disclosures of which are incorporated herein by reference.

Another approach for field re-covering of elongate substrates such as pipelines is described in US-4732632. According to a preferred embodiment of US-4732632 a curable epoxy layer is first applied to a pipeline and then one or more polymeric layers applied thereover. The innermost of the applied polymeric layers is selected to interact, physically or chemically with the curable layer.

The applicant has developed a new method of providing a protective coating to an elongate substrate, which can be easily carried out, either in the factory, or in the field.

Accordingly there is provided a method of providing a protective covering to an elongate substrate comprising the steps of:
(i) surrounding the substrate with a thermal barrier layer which is bondable to the substrate without the application heat;
(ii) enveloping the substrate and the thermal barrier within a heat recoverable polymeric outer layer.
(iii) providing a heat ativatable adhesive layer, preferably a hot-melt adhesive, between the thermal barrier layer and the outer layer; and
(iv) applying heat to said layers to recover the heat recoverable polymer outer layer and active the adhesive.

Preferably the heat recoverable layer is provided in the form of tape which is helically wound around the elongate substrate. Preferably overlapping edges of the tape expose bare portions of heat-activatable adhesive to the adjacent tape edge, i.e. uncovered by thermal barrier layer. This allows a strong bond to form between adjacent turns of the tape.

Conveniently the adhesive layer is coated onto the heat recoverable layer prior to applying the heat recoverable layer to the thermal barrier layer. and more conveniently the thermal barrier layer is coated onto adhesive layer.

As an example the thermal barrier layer may be a heat stable polymer sheet (e.g. tape) coated internally with a layer of mastic, or may simply be a layer of mastic.

A mastic is an adherent, cohesive sealing material intended to fill a gap between two components. A mastic can deform or yield plastically, that is, undergo viscous flow, both during application and in subsequent service at ambient temperatures. Mastics may consist of mixtures of substantially non-crystalline materials, for example, bituminous materials, elastomers, or thermoplastic polymers, and may contain inert fibrous or powdered fillers. A mastic is typically bondable to a substrate without the application of heat. The bond is not as strong as that achieved by a heat-activatable adhesive, but is sufficiently strong to allow easy application of a mastic coated sheet or tape.

Suitable mastics for use in the present invention would be apparent to the man skilled in the art.

Typically thicknesses of heat activatable adhesive in the range 0.2-0.8 mm e.g. 0.3 - 0.6 mm are used. The thermal barrier layer preferably has a thickness of at least 0.3 mm, especially at least 0.5 mm.

Advantages of preferred embodiments of the present invention are that the good mechanical properties generally associated with heat activatable adhesives (e.g. high peel and shear strength) exist because of exposed regions of heat activatable adhesive not coated with mastic, and these properties are combined with the cold bonding characteristics of a mastic.

Also according to the invention there is provided a pipeline having a protective covering comprising
a thermal barrier layer adjacent to the pipe;
an adhesive layer adjacent to the thermal barrier layer; and
a helically wound heat recoverable polymeric tape enclosing said barrier layer and adhesive layer and heat shrunk thereon.

The invention will be described by way of example and with reference to the accompanying drawings in which :
Figure 1 is a longitudinal section through a pipe showing the layers applied according to a method of the invention;
Figure 2 is a section through a polymeric backing tape with mastic thereon which can be applied according to another method of the invention;
Figure 3 is a section through a polymeric backing tape with a mastic coating one side and an adhesive on the other side thereof, which can be applied according to a method of the invention: and
Figure 4 is a section through a protective coating which can be applied by a method according to yet another aspect of the invention.

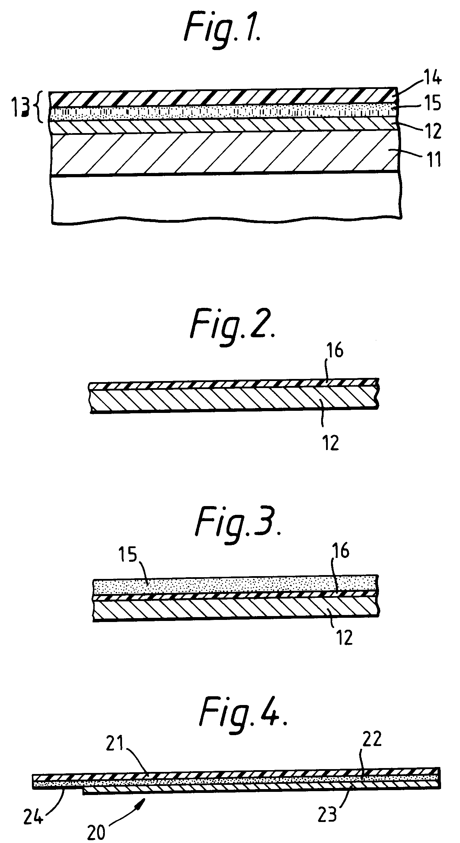

The invention is shown in one form in Figure 1 in which a pipe 11 is coated with a thermal barrier layer, which is preferably mastic 12. The mastic 12 can be provided in the form of polymeric tape 16 coated with a mastic layer 12 (see Figure 2). The mastic coated tape is heat stable, i.e. not heat recoverable, and can be applied cold without the use of a heater. An envelope 13 of heat-shrinkable thermoplastic tape 14 with a layer of heat activatable adhesive 15 is then wrapped around the mastic layer 12. The tape is preferably made from a radiation crosslinked polyolefin, preferably polyethylene.

The heat shrinkable tape 14 is then subject to heat, for example by infra-red radiant heaters or by a gas torch. This causes the tape to shrink, the adhesive to melt and flow to effect the bond to the pipe 11, or the mastic to flow and fill any gaps. The mastic layer 12 provides some adhesion to the pipe 11 and corrosion protection. The mastic 12 also provides some thermal barrier between the heat shrinkable layer 14 and the pipe 11, preventing or reducing the pipe from acting as a heat sink, when heat is applied to shrink tape 14.

In cold temperature conditions, a primer material may be applied to the pipe prior to coating the pipe with the mastic layer. Suitable primers are those described in US 4732632, the disclosure of which is incorporated herein by reference. Although a primer can be used in the present invention, an important advantage of the invention is that a suitable re-covering or rehabilitation of pipelines can be achieved without the use of a primer.

The adhesive used in this specific embodiment, or in other embodiments generally is preferably a hot melt adhesive with some mastic properties. In some applications the adhesive and mastic layers could comprise the same material.

Preferably the adhesive is a hot melt adhesive containing ethylene and ethylene copolymers, for example copolymers of ethylene with vinyl acetate, maleic anhydride, acrylic acid, methacrylic acid, or an alkyl acrylate, for example ethyl acrylate. The preferred adhesive is a mastic of one ethylene copolymer with a second elastomeric ethylene copolymer. Such adhesives are shown in detail in U.S Patent No. 4332665, the disclosure of which is incorporated herein by reference.

The polymeric tape 14 can be any suitable polymeric material such as polyethylene, polypropylene etc, as is known in the field.

Where an additional primer layer is applied to the pipe under the mastic (now shown in drawings) this may comprise a liquid epoxy in curable form of the type disclosed in US Patent No. 4732632.

A variation is shown in Figure 3. In this Figure the polymeric tape 16 is coated on one side with the mastic 12 and on the other side with an adhesive layer 15. The tape is wrapped around the pipe in a 'cold' condition and a heat-shrinkable tape (uncoated) is then applied over the top as before.

A third embodiment of the invention utilizes a tape 20 of the construction shown in Figure 4.

The tape 20 comprises a heat shrinkable thermoplastic layer 21 coated with an adjacent layer of heat activated adhesive, which is in turn coated with a layer of mastic 23 so that all three layers form a single component which can be helically wrapped around the external surface of a pipe.

In order to promote bonding to a steel pipe it may be necessary to coat the pipe surface with a thermosetting primer of the type previously discussed.

The tape 20 is wrapped around the pipe 11 so that adjacent turns of tape overlap.

In order for the overlapping helical turns of tape 20 to adhere properly to each other. an edge margin 24 of the tape is left mastic free. This ensures that the heat activated tape adhesive 22 effects a strong adhesive bond between overlapping portions of the tape.

In the above embodiments the mastic layer 12 preferably has a thickness of at least 0.5 mm, and the adhesive layer also has a thickness of about 0.5 mm.

## Claims

1. A method of providing a protective covering to an elongate substrate comprising the steps of:
(i) coating the substrate with a thermal barrier layer which is bondable to the substrate without the application of heat;
(ii) enveloping the substrate and thermal barrier within a heat recoverable polymeric outer layer.
(iii) providing a heat activatable adhesive layer between the thermal barrier layer and the outer layer; and
(iv) applying heat to said layers to recover the heat recoverable polymer outer layer and activate the adhesive.

2. A method as claimed in claim 1 wherein the heat recoverable layer is provided in the form of tape which is helically wound around the elongate substrate.

3. A method as claimed in claim 1 or claim 2 wherein the adhesive layer is coated onto the heat recoverable layer prior to applying the heat-recoverable layer onto the thermal barrier layer.

4. A method as claimed in claim 3, wherein the thermal barrier layer is coated onto the adhesive layer prior to application on to the substrate.

5. A method as claimed in claim 4, when dependant upon claim 2, wherein the tape has one edge margin thereof which is free of the thermal barrier layer, said method function comprising winding the tape around the elongate substrate so that said edge margin overlaps with a previous adjacent wrapped turn of the tape.

6. A method of protecting a pipeline wherein the pipe is provided with a protective coating by a method as claimed in any of claims 1 to 5.

7. A method of refurbishing the protective coating of an existing pipeline whose original protective layer may have become inadequate, wherein said method includes a method as claimed in any one of claims 1 to 5.

8. A method as claimed in any one of claims 1 to 7 wherein the heat is applied to the layer in the form of infrared heating.

9. A method as claimed in any one of claims 1 to 8, wherein a primer layer is between the thermal barrier layer and the elongate substrate, preferably to the substrate.

10. A pipeline having a protective covering thereon installed by a method as claimed in any one of claims 1 to 9.

11. A pipeline having a protective covering comprising:
a thermal barrier layer adjacent to the pipe,
an adhesive layer adjacent to the thermal barrier layer; and
a helically wound heat recoverable polymeric tape enclosing said barrier layer and adhesive layer and heat shrunk thereover

12. A pipeline as claimed in claim 11, wherein the adhesive layer is coated onto the tape.

13. A pipeline as claimed in claim 12, wherein the thermal barrier layer is coated onto the adhesive layer.

14. A pipeline as claimed in any one of claims 11-13 wherein the thermal barrier layer is a mastic.

15. A pipeline as claimed in claim 14 where dependent upon claim 13 wherein the covering is in the form of a helically wrapped tape, and one edge margin of said tape is free of mastic so that said edge margin overlaps with an edge margin of a previous adjacent wrapped turn of the tape.
